**Europäisches Patentamt**

**European Patent Office**

**Office européen des brevets**

(11) Publication number: **0 051 407**
**A2**

## (12) EUROPEAN PATENT APPLICATION

(21) Application number: **81304995.4**

(22) Date of filing: **23.10.81**

(51) Int. Cl.³: **B 28 B 11/14**
**B 28 D 1/04**

(30) Priority: **11.11.80 GB 8036171**
**13.11.80 GB 8036525**
**13.11.80 GB 8036527**

(43) Date of publication of application:
**12.05.82 Bulletin 82/19**

(84) Designated Contracting States:
**BE DE FR IT NL SE**

(71) Applicant: **REDPATH DORMAN LONG LIMITED**
**53 Goldington Road**
**Bedford Bedfordshire(GB)**

(72) Inventor: **Wass, Brian**
**22 Chester Green Road**
**Derby Derbyshire(GB)**

(72) Inventor: **Skinns, Paul**
**154A Far Laund**
**Belper Derbyshire(GB)**

(74) Representative: **Fry, Alan Valentine**
**British Steel Corporation Patent Section NLA Tower 12**
**Addiscombe Road**
**Croydon CR9 3JH Surrey(GB)**

(54) Improvements in or relating to travelling rotary saw assemblies.

(57) A travelling rotary saw assembly includes a support carriage (1) which straddles a concrete bed (5) located on an elongate casting pallet and travels along guides positioned (1) on each side of the pallet. A cross carriage (15) is located on the support carriage and is movable across the bed. A rotary saw (24) is suspended below the cross carriage with its rotational access positioned below the area bounded by the points of contact made by the cross carriage with the main carriage.

FIG.1.

# Improvements in or relating to travelling rotary saw assemblies.

This invention relates to travelling rotary saw assemblies and in particular to rotary bed saws for cutting beam or slab lengths of prestressed concrete from an elongate bed.

Prestressed concrete beds are conventionally cast on to elongate pallets over which prestressed wire strands are located; the wire strands become embedded into the cast bed for prestressing purposes. The bed, once cured, is conventionally cut into several slab or beam lengths by a rotary saw driven laterally across and through the cast bed.

Hitherto, rotary bed saws have generally employed a saw supported in a cantilever fashion from one side of a carriage movable laterally across the width of a bed. Such saws suffer from a number of disadvantages, these including inaccuracy of cut caused by the cantilever mounting of the saw blade and environmental and health hazards caused by inadequate shielding of the saw blade.

Furthermore, the blade life of rotary bed saws has in many cases been shortened by incorrect matching of saw blade advancement through a bed with cutting speed. A too-rapid advancement leads to an excessively high pressure being present at the blade edge and consequent blade failure; a too-slow advancement leads to over-heating at the blade edge which again can lead to blade failure.

During cutting there is a need on occasions either to stop or rapidly to withdraw the rotary saw in order to avoid clamping of the saw blade within the cut. Clamping occurs normally as the saw blade cuts through a prestressed wire thereby releasing the tensile force present within the cast bed so causing the cut faces of the bed to move inwardly towards one another.

The present invention provides a travelling rotary saw assembly which comprises a support carriage adapted to straddle a concrete bed disposed on an elongate casting pallet and to travel along longitudinal guides positioned one on each side of said pallet, a cross carriage supported by said support carriage and movable laterally of said bed on guides carried by said support carriage, and a rotary saw suspended below said cross carriage with its rotational axis positioned below the area bounded by the points of contact made by the cross carriage with the main carriage guides.

The rotary saw may be mounted for pivotal movement between raised and lowered positions; in this arrangement the saw may be carried by a radius arm supported on a shaft mounted between a pair of support members dependent from and integral with the cross-carriage. The saw may be moved between its raised and lowered positions through a ram connected between the radius arm and the cross carriage. The rotary saw may be diamond-tipped and may be driven by a hydrostatic hydraulic motor coupled directly to the saw blade spindle.

The cross-carriage may be propelled over the guides carried by the support carriage by drive means which are controlled in response to the torque or forces acting on the cutting edge of the blade saw in a sense to maintain such torque or forces either substantially constant or at predetermined values.

The support carriage preferably has wheels adapted to track along rails positioned one on each side of the bed and is driven along these rails by an hydraulic motor. The cross carriage drive may be an hydraulic motor. The cross carriage may be driven hydraulically through an electric motor and hydraulic pump carried by the cross carriage itself.

A system for controlling the advancement of the rotary saw through a concrete slab or beam may be provided in which the power required to advance the saw through the slab or beam is sensed and the advancement drive is either arrested or reversed upon a predetermined power level being detected. In one arrangement, a signal representative of the power required to advance the rotary saw is compared with a set reference signal and any ensuing error signal used to drive a relay either to stop or withdraw the saw from the cut.

The invention will now be described by way of example with reference to the accompanying diagrammatic drawings in which:

Figure 1 is an end elevation view of the rotary saw assembly in accordance with the invention;

Figure 2 is a side elevation of the assembly illustrated in Figure 1;

Figure 3 is a section taken along line III-III of Figure 2;

Figure 4 is a diagram showing a control system for use with the assembly illustrated in Figures 1 to 3; and

Figure 5 schematically illustrates a system for controlling the advancement of a saw assembly in accordance with the invention.

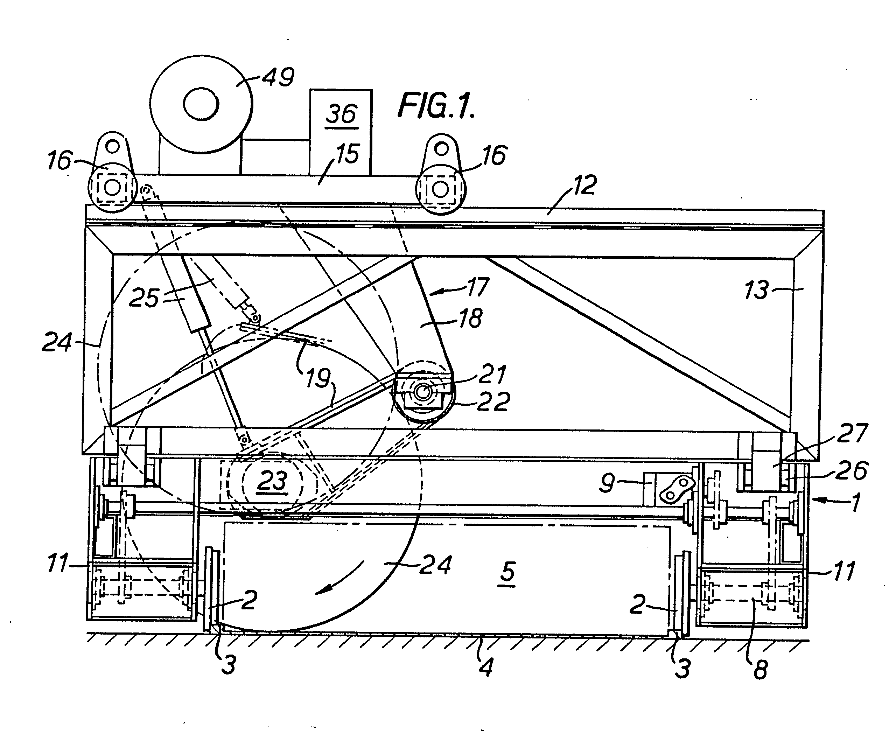

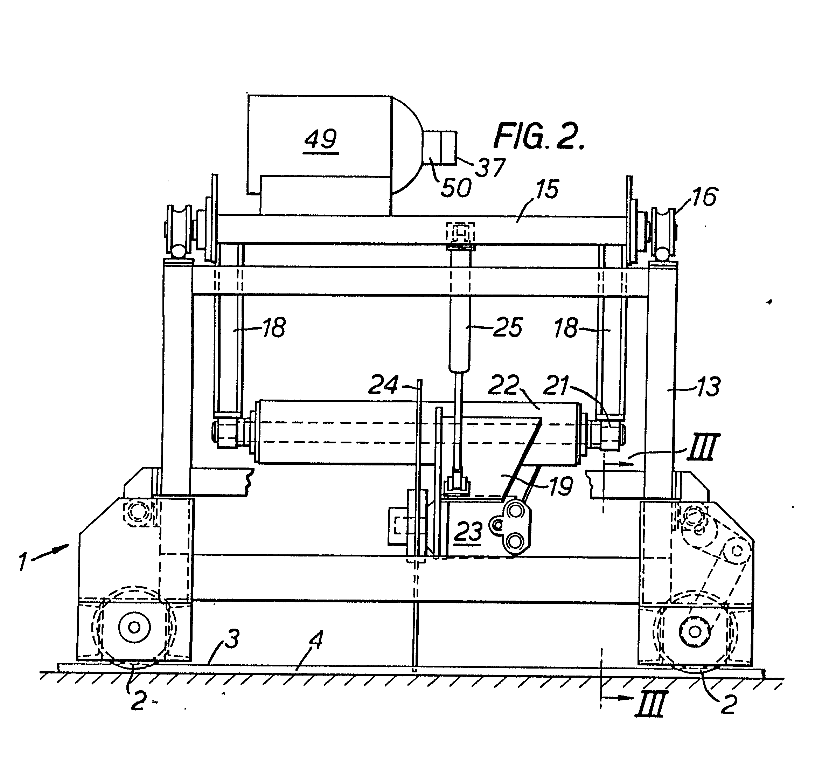

The saw assembly illustrated in Figures 1 and 2 comprises a main support carriage 1 having wheels 2 which track on rails 3 positioned one on each side of a casting pallet 4 upon which is cast a raised prestressed concrete bed 5; conveniently, the concrete bed is cast by a slip forming or core extrusion machine which moves along the rails 3. The carriage 1 straddles the pallet 4 and the rails 3 extend longitudinally along the full length of the pallet 4.

The carriage wheels are supported in trunnions 8 and driven by one or more hydraulic motors 9. The trunnions 8 are located within corner frames 11 and carry a saw-support frame 13.

The frame 13, like the carriage 1, is of simple open-box configuration and supports on its upper surface a pair of rails 12 along which runs a cross-carriage 15 having wheels 16. Dependent from and integral with the base of the cross-carriage 15 is a pair of bracket members 18. Supported between the free ends of the members 18 in bearings 22 is a shaft 21 upon which is mounted a radius arm 19. A hydrostatic hydraulic motor 23 coupled directly to the drive spindle of a diamond-tipped rotary bed saw 24 is supported from the free end of the radius arm 19. The rotary saw 24 can be moved between the two positions indicated in full and broken line by means of a hydraulic ram 25 connected at one end to the cross-carriage 15 and at the other to one of the radius arms 19.

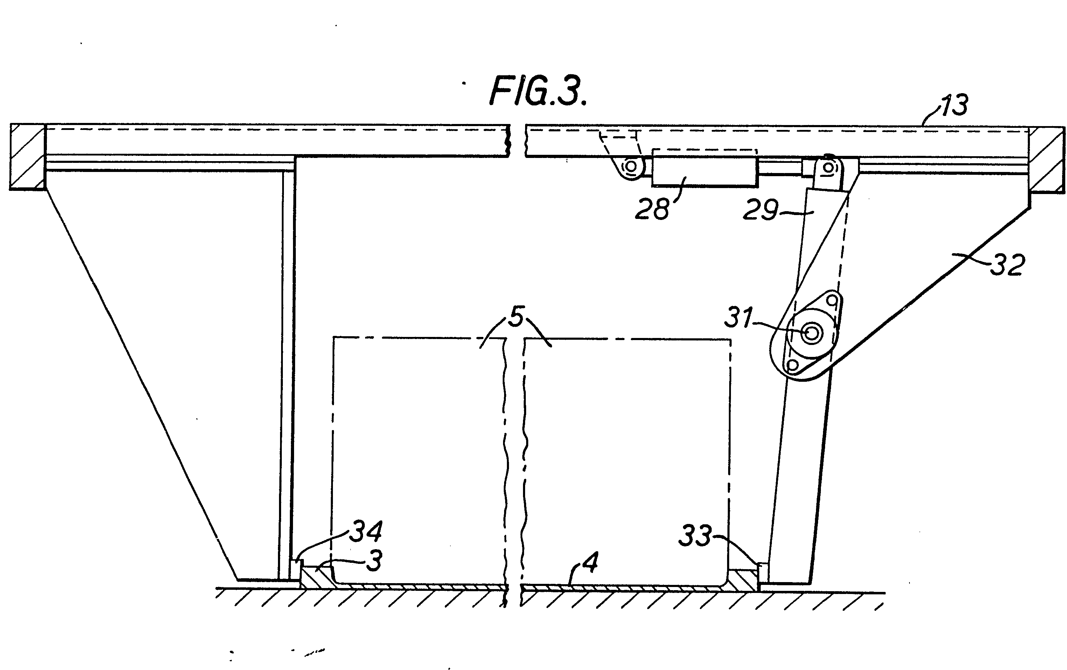

As will be seen from figures 1 and 3 the support carriage supports at each end a slide bar 26 upon which is mounted a sliding block 27. The sliding blocks 27 are attached to and support the saw-support frame 13 above the carriage 1. Mounted on the frame of the carriage 1 is an hydraulic ram 28. The ram 28 is connected at one end to an upstanding lever 29 pivotable about a beam 31 supported between downwardly protruding arms 32 integral with the frame 13. On the lower ends of the lever arms 29 is mounted a clamp 33 which extends lengthwise of the carriage and is arranged to bear on one side of the right-hand rail as seen in Figure 3. The clamp 33 is operable through the rams 28 to move the frame 13 sideways so that a further clamp 34 engages and is held firmly against the left hand rail 3 to lock the saw-support frame 13 in position relative to the bed. This clamping connection effectively places the saw perpendicular to the adjacent face of the bed so that an accurate cut can be made against the width of the bed.

To effect declamping of the frame 13 from the rails 3, a reaction arm (not shown) is mounted on the side of the carriage 1 adjacent the lever arm 29, the latter cooperating with the reaction arm on operation of the ram 28 to move the support frame 13 sideways to disengage the clamps from the rails 3.

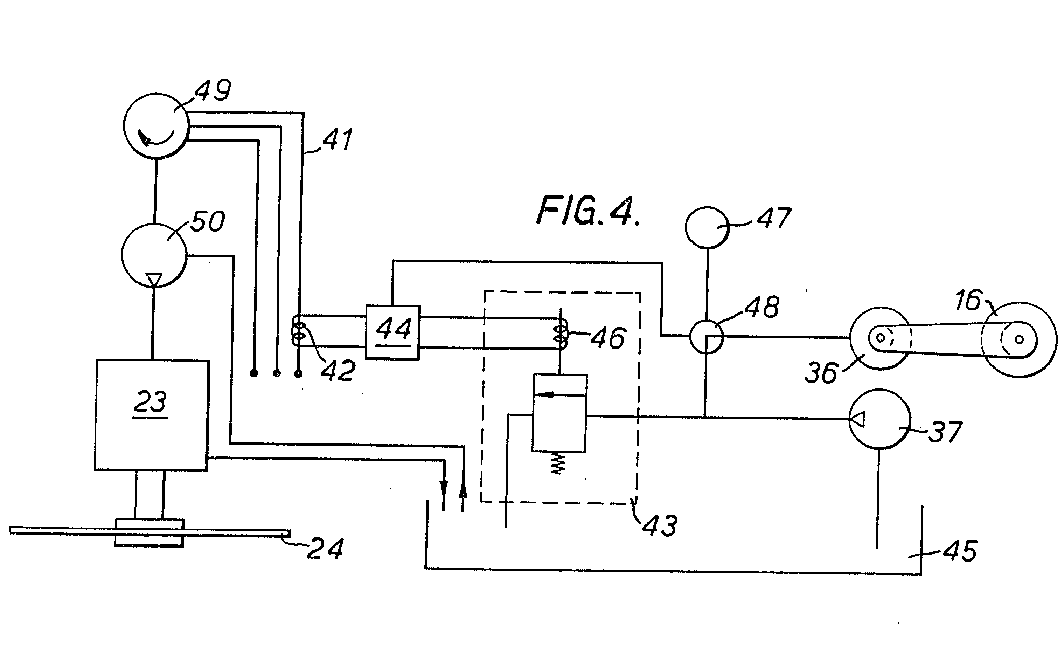

One or both pairs of the wheels 16 of the cross-carriage 15 is driven hydraulically through a drive motor 36 and hydraulic pump 37 mounted on the carriage 15. The drive to the carriage and, consequently, the advancement rate of the rotary saw through the bed, is controlled by the apparatus schematically illustrated in Figure 4.

The wheels 16 are connected to the motor 36, directly or through a drive chain or gears. The motor 36 can be powered electrically or pneumatically or mechanically but is preferably powered by hydraulic means.

The hydraulic motor 23 which drives the rotary saw 24 is supplied by hydraulic power by pump 50 which in turn is powered by an electric motor 49 which is supplied by electrical power leads 41. One or more supply leads pass through and/or around a current transformer 42. The induced current in the coils of the current transformer 42 is passed as a control signal either directly to a proportional solenoid hydraulic pressure relief valve 43, or first through a current control unit 44 and then to the valve 43.

The relief valve 43 operates in a hydraulic circuit powered by the hydraulic pump 37. Fluid is taken from a reservoir tank 45 and is pressurised in pump 37. Fluid then passes to the proportional relief valve 43.

The relief valve 43 relieves the oil pressure in the system in proportion to the current applied to the valve coil 46. The drive torque in the hydraulic motor 36 thus varies according to the pressure in the system and inter alia as the current applied to the coil 46. Because the constant flow rate hydraulic motor 36 is coupled to the drive wheels 16, variations in the drive torque produce variations in electrical supply current taken by the electric motor 49 thereby inducing sympathic variations in the drive force on the drive wheels 16. An increase in saw torque will thus be relieved by a decrease in propulsion force at the drive wheels and vice versa.

The signal current can be modified by the control box 44, either by amplification or attenuation in accordance with the force requirements of the system.

Additionally, the control box 44 can incorporate by way of example a time delay apparatus, a servo system, a programmer, an analogue or digital computer or microprocessor to modify the current to the proportional relief valve in accordance with the force requirements of the system.

A similar control is employed for maintaining the force exerted by the saw blade cutting edge constant as the blade is initially pivoted downwardly by operation of the hydraulic ram 25. As will be seen from Figure 4, the ram drive 47 is connected via a change-over solenoid 48 to the control box 44. Thus, during initial operation of the saw, the solenoid 48 is so positioned that the ram drive 47, and consequently movement of the saw blade, is controlled in the manner described above. Once the saw has reached its lowermost position, the changeover solenoid 48 is operated to connect the hydraulic motor 36 into the control circuit. The sawing operation then proceeds as described above.

Several alternatives to the control systems described can be employed. Thus, the motor 23 may be electrically powered; alternatively, the control signal may be generated by a pressure transducer tapped into the hydraulic feed line to the motor 23.

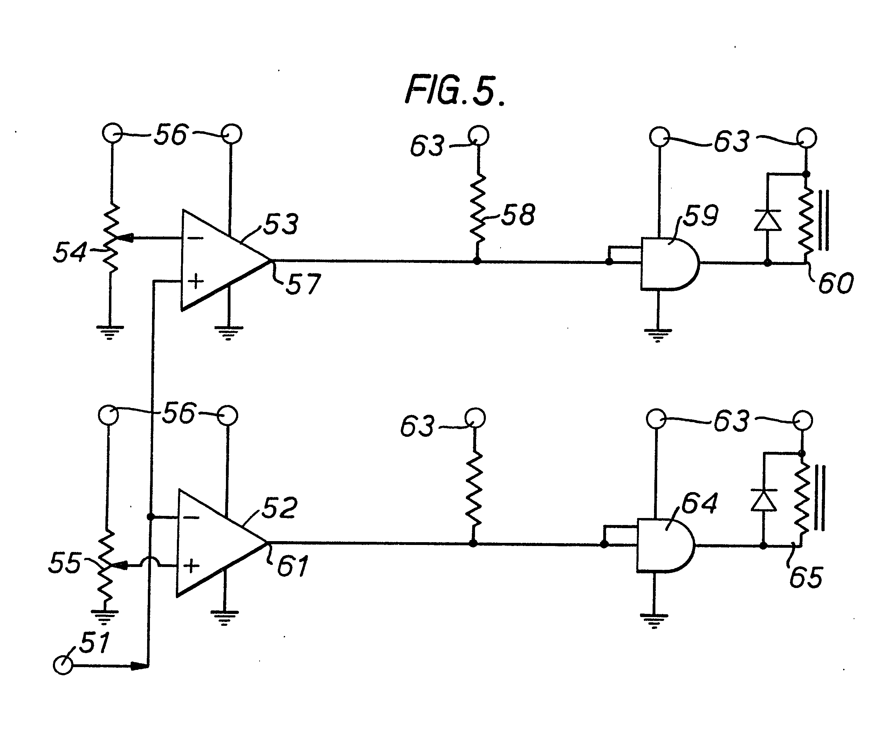

In the system for controlling the advancement of the rotary saw as illustrated in Figure 5, a voltage signal representative of the power required to advance a rotary saw through a concrete bed is admitted to the system at terminal 51. This input signal is compared within comparators 52,53 with reference signals set at resistors 54,55. The reference voltage of resistor 54 is lower than that set at resistor 55; thus the resistor 54 may be set at say 2.5 volts and that of resistor 55 at 3.0 volts. The resistors and the comparators are powered from a 12 volt source 56. I the difference signal at comparator 53 is positive, a gate 57 closes to cause a voltage input from a resistor 58 to be transmitted to a driver 59 which operates a relay 60 to arrest further movement of the rotary saw through the concrete beam. With the gate 57 open the voltage from the resistor 58 passes to earth.

If, however, the input signal admitted at terminal 51 exceeds the reference voltage set at comparator 55, then a gate 61 of the comparator 52 closes to enable voltage from a source 63 to be transmitted to a drive 64 to operate a relay 65 to withdraw the saw from the cut.

Thus, during cutting of a concrete beam, clamping of the saw within the cut is prevented by the above described system in that excessive power loadings created by closure of the cut are sensed and the saw rapidly controlled either to arrest further movement or to withdraw it from the cut before it becomes clamped within the cut.

In operation of the saw assembly described above, the support carriage 1 is driven along the rails 3 to a position equivalent to the length of a concrete bed to be cut. The rams 28 are then operated to move the clamp 33 into engagement with the right hand rail 3. Further movement of the ram draws the support frame 13 to the right as shown in Figure 3, to draw the clamp 34 firmly into contact with the left hand rail 3 and to lock the saw support frame 13 relative to the bed.

The rotary saw 24 driven by the motor 23 is then pivoted downwardly by the ram 25 about the shaft 21 into cutting engagement with the bed 5, blade advancement being controlled to maintain a constant force at the saw cutting edge. Once the saw has reached its lowermost position, the cross-carriage 15 is driven slowly along the rails 12 to advance the cutting blade of the saw through the bed. The drive to the carriage 15 is again controlled in the manner described above to maintain a constant force at the cutting edge of the saw.

The saw assembly described exhibits several advantages over conventional assemblies. Thus, the central location of the saw itself avoids any misalignment of the saw blade during cutting occasioned by the cantilevered mounting of conventional saws. Additionally, the central location enables the box frame 13 and, therefore, the saw blade to be completely encased to minimise the excessive noise and handling hazards normal in conventional assemblies. Further, the controlled drive of the saw through the bed increases blade life andminimises damage to such items as bearings caused by incorrect matching of saw blade advancement with cutting speed. Finally the control system illustrated in Figure 5 ensures that the blade does not become trapped

within the cut.

CLAIMS:-

1. A travelling rotary saw assembly which comprises a support carriage adapted to straddle a concrete bed disposed on an elongate casting pallet and to travel along longitudinal guides positioned one on each side of said pallet, the saw assembly being characterised by a cross carriage (15) supported by said support carriage (1) and movable laterally of said bed (5) on guides (12) carried by said support carriage, and a rotary saw (24) suspended below said cross carriage with its rotational axis positioned below the area bounded by the points of contact made by the cross carriage with the main carriage guides.

2. An assembly as claimed in Claim 1 characterised in that the rotary saw (24) is carried by a radius arm (19) supported on a shaft (21) mounted between a pair of support members (18) dependent from and integral with the cross carriage, the saw being movable between raised and lowered positions through drive means (25) acting upon the radius arm.

3. An assembly as claimed in Claim 2 characterised in that the drive means comprises a ram (25) connected between the radius arm (19) and the cross-carriage (15).

4. An assembly as claimed in any one of the preceding claims characterised in that the saw is driven by a hydrostatic hydraulic motor (23) coupled directly to the spindle of the saw blade.

5. An assembly as claimed in any one of the preceding claims characterised in that the cross-carriage is propelled over the guides carried by the support carriage by drive means (36) which is controlled in response to the torque or forces acting on the cutting edge of the blade saw (24) in a sense to maintain such torque or forces either substantially constant or at predetermined values.

6. An assembly as claimed in any one of Claims 2 to 5 characterised in that the drive means (25) acting upon the radius arm is controlled in response to the torque or forces acting upon the cutting edge of the blade saw (24) in a sense to maintain such torque or forces either substantially constant or at predetermined values.

7. An assembly as claimed in any one of the preceding claims characterised in that in operation of the saw, the power required to advance the saw through a slab or beam is sensed and the respective drive means is automatically either arrested or reversed upon a predetermined power level being detected.

8. An assembly as claimed in Claim 7 characterised in that a signal representative of the power required to advance the rotary saw through a slab or beam is compared with a set reference signal and any ensuing error signal used to drive a relay either to stop or withdraw the saw from the cut.

FIG.1.

FIG. 2.

FIG.3.

FIG.4.

FIG.5.